# EUROPEAN PATENT SPECIFICATION

(11) **EP 1 642 445 B1**
(45) Date of publication and mention of the grant of the patent: **30.12.2009**
(21) Application number: 04742124.3
(22) Date of filing: 23.06.2004
(51) Int. Cl.: H04M 1/02, G06F 1/16, G06F 3/03

(54) **MULTIFUNCTIONAL UI INPUT DEVICE FOR MOBILE TERMINALS**
MEHRFUNKTIONS-UI-EINGABEGERÄT FÜR MOBILE ENDGERÄTE
DISPOSITIF D'ENTREE A INTERFACE UTILISATEUR MULTIFONCTIONNELLE POUR TERMINAUX MOBILES

(30) Priority: 25.06.2003 US 603585
(43) Date of publication of application: 05.04.2006
(73) Proprietor: Nokia Corporation, 02150 Espoo (FI)
(72) Inventor: MÄNTYSALO, Tapio, FI-21510 Hevonpää (FI); VUORI, Petri, FI-24310 Salo (FI)
(74) Representative: Heikkinen, Esko Juhani
(86) International application number: PCT/FI2004/000381
(87) International publication number: WO 2004/114636

(56) References cited:
- EP-A2- 0 913 976
- WO-A1-03/007288
- GB-A- 2 299 394
- US-A- 6 067 358
- US-A- 6 124 845
- US-A1- 2004 021 696

## Description

### TECHNICAL FIELD OF THE INVENTION

The invention relates to an UI (User Interface) input device and especially to a multifunctional UI input device for mobile terminals.

### BACKGROUND OF THE INVENTION

Different kinds of mobile terminals comprising UI input devices are known from prior art such as portable computers or laptops, cellular telephones and personal digital assistants (PDA). Thus there are also provided lots of solutions for inputting data to these mobile terminals. The best-known UI input devices among other things are buttons, sensitive touch pad or plate mouse and pen-usable touch screen. Also voice commands are known from prior art to use for inputting data or controlling different kind of functions, such as for example call up to predetermined number.

Document of EP 0 913 976 B1 discloses a radiotelephone handset comprising a housing having a front face having a keypad to be presented to the face of the user when making a call, and a rear face, the handset having a user interface comprising an audio interface and a touch interface. The touch interface includes touch input means on the rear face of the housing for directing the processing of voice signals supplied to the audio interface and the touch input means is provided towards the top of the housing to promote single handed operation. The handset may comprise a display, and the touch input means may manipulate the contents of that display. The touch input means may also provide other functions, such as other in call functions (e.g. sending / ending calls).

There are, however, some disadvantages in the prior art solutions for example when UI input devices known from prior art are used in tightly packed format, such as in traditional cellular telephones. For instance, the traditional way of putting the keyboard to the same side of the terminal where the display locates makes the keyboard and display to be smaller than desired and especially if the form- and size-factor trends are followed. Further some disadvantages relate also to use of touch-screen in a terminal such as poor optical performance and easily breakable structure, which features are not optimal for use in high-accuracy graphical displays that are carried around. Also pen-input UI devices are cumbersome because the pen is typically small and easy to lose. In addition touch interfaces are sensitive also to external mechanical stress and they get broken easily.

### SUMMARY OF THE INVENTION

An object of the invention is to solve the problem of how to implement easy to use user interface (UI), which offers maximized size of display and graphical input means, into tightly packed and easy-to-carry format. An additional object of the invention is also to solve the problem of how to efficiently use most of the surface area of the terminal for UI purposes. Further object of the invention is also to offer a familiar qwerty-type keyboard also to user of small mobile terminals without reducing the area of display. One additional object of the invention is also to me chanically protect the terminal against pressure, push and mechanical stress. One further additional object of the invention is to make possible to use fingers of both hands at the same time for managing the data effectively on the display.

The objects of the invention are fulfilled providing a mobile terminal with a touch pad UI, where the touch pad UI is separated from the display unit into the discrete unit and where the touch pad UI at least in one mode is arranged into the back side of the mobile terminal (an opposite side of the side where the display locates) so that a user can operate the touch pad UI device by his same finger by which he supports the mobile terminal at the back side when using the terminal. The touch pad UI may be flipped to the back side of the mobile terminal in a flip-type terminal construction, where the touch pad UI is hinged to the mobile terminal or alternatively the touch pad UI may be fixedly located in the back side of the mobile terminal in a monoblock-type terminal construction. In second mode the touch pad may be flipped to a certain angle (horizontal position) relative to the terminal in a flip-type terminal construction. In addition the objects of the invention are achieved by arranging the touch pad UI to recognize movements of the user finger on the touch pad independently of the position angle of the touch pad UI relative to the terminal and move a cursor on the display of the terminal and read input commands according to the movements of the finger.

The following notions are used in this application:
"Flip-type terminal construction": A flip-type terminal construction comprises a touch pad UI input device hinged to the mobile terminal by a hinge. Further in the flip-type terminal construction, three main usages for the solution can be applied:
   1° Touch pad UI is closed: a touch pad and display is mechanically protected,
   2° Touch pad UI is opened not over than approximately 180°: a touch pad is used in the same way as an input device in laptops, and
   3° Touch pad UI is opened approximately 360° opened: two-hand mode, where a touch pad is a pointing/input device using tips of middle fingers - no pen is needed!
"Monoblock-type construction": A touch pad UI input device is located in outer surface of a B-cover (or Functional Cover) in a monoblock construction. In monoblock-type terminals the implementation can be either integrated or in form of functional cover.
Touch pad UI": A touch pad UI, or more precisely a multifunctional touch pad user interface device, typically comprises functionality for numbers of functions, such as determining movements of at least one fingertip on the surface of the touch pad UI. The touch pad UI advantageously comprises touch sensitive area for determining the movements of the finger on the surface of the touch pad. Additionally the touch pad UI may comprise a pressure sensitive means under the touch pad surface, for example, for determining the presses of the finger on the touch pad, so that a user could do point and click -operation as normally done with a mouse, for example. According to an embodiment of the invention the position of the cursor is determined by the position of a fingertip on the touch pad, and clicking is achieved by pressing the touch pad with the same finger. Clicking may be achieved also by pressing a certain button locating, for example, in the front side of a mobile terminal. The button may be pressed for example by a thumb.
"Two-hand -mode": In this mode the touch pad UI is either fixedly arranged or alternatively flipped into the back side of a mobile terminal (opposite side of the display side) so that in use a user can see the display side of the mobile terminal in the field of vision, support the mobile terminal by his fingers at the back side and at the same time input data through the touch pad locating in the back side of the mobile terminal by using the same fingers by which he supports the mobile terminal and further seeing a cursor moving on the display of the mobile terminal following the movements of his finger on the touch pad UI at the same time when he is moving his finger on the touch pad UI.

In first aspect of the invention, a method for providing a touch pad UI input device in a mobile terminal is presented. The method implemented in the flip-type mobile terminal includes at least following steps: observing the position angle of the touch pad UI input device relative to the mobile terminal and; if the touch pad UI input device is closed it acts as a mechanical protector for the surface of the touch pad UI and the display unit and; if the touch pad UI input device is opened (more than few degrees, such as for example opened about 90° but not more than approximately 180°), it is used in a same way as an input device in laptops and; if the touch pad UI input device is opened more than 180° or especially if it is opened completely (essentially 360°, whereupon the touch pad is located in the back side of the mobile terminal) it acts as a pointing and input device using tips of middle fingers, for example. Further, when the touch pad UI input device is opened more than 180°, movements of the fingers (in vertical directions if the touch pad is hinged to the lowest or upper part into the mobile terminal or alternatively in horizontal direction if the touch pad is hinged to the right or left part into the mobile terminal) on the touch pad has to be read contrary to the situation where the touch pad UI input device is opened at maximum 180°.

The method implemented in the monoblock-type mobile terminal and also in flip-type terminal construction when the touch pad is opened completely or located in the back side of the mobile terminal includes at least the following steps: observing movements or the position of the user fingertip on the touch pad UI by a touch sensitive means of the touch pad UI input device and determining and also displaying the position of the cursor on the display by the position of the fingertip on the touch pad. The method may also include the step of observing presses of the user fingertip on the touch pad UI input device, especially if the touch pad UI input device comprises a pressure sensitive means, and determining a click-operation by pressing the touch pad with the finger. Clicking may be achieved also by pressing a certain button by a thumb, where the button locates, for example, in the front side of the mobile terminal.

Further the method according to an additional embodiment of the present invention implemented in the monoblock-type mobile terminal and also in flip-type terminal construction may include the step of dividing the touch pad UI virtually into the two or more portion, for example one portion for a left hand and one portion for a right hand, whereupon a user can move a cursor with his right hand finger, scroll a content displayed in the display of the mobile terminal in the direction of up/down by moving his left hand finger to the up/down or in the direction of left/right by moving his left hand finger to the left/right on the surface of the touch pad UI input device. Furthermore it may be possible for the user to zoom the content of the display in/out by moving his left finger on the left portion of the surface of the touch pad UI, for example, and at the same time pressing the right portion of the touch pad UI input device by a right hand finger, for example. Alternatively, at the same, when the user moves his finger on the surface of the touch pad UI, he can press, not the surface of the touch pad UI, but a certain button, such as a button locating, for example, in the front side of a mobile terminal in order to zoom the content of the display in or out. The button may be pressed for example by a thumb. The method described above may advantageously be utilized for example in improved web-browsing.

In a second aspect of the invention, a mobile terminal embodying the invention is presented. The flip-type mobile terminal construction comprises a separate touch pad UI input device hinged to the mobile terminal in a way that in a closed position the touch pad UI input device act as a mechanical protector for the touch sensitive surface of the touch pad UI and the display unit. Further the touch pad UI input device is arranged to operate as an input device in laptops when opened more than few degrees (opened about 90° but not more than approximately 180°, for example). In addition the touch pad UI input device is also arranged to operate as a pointing and input device using tips for example of middle fingers when opened completely (essentially 360°, whereupon the touch pad is located in the back side of the mobile terminal). Furthermore the flip-type mobile terminal comprising the hinged touch pad UI input device is arranged to observe the position angle of the touch pad UI input device relative to the mobile terminal and function according to a certain mode characteristic for each position of the touch pad, such as for example operate on standby mode when the touch pad is closed and activating for example a virtual keyboard on the display when the touch pad is opened. Especially, the mobile terminal or alternatively the touch pad UI is arranged to read the movements of the fingers in vertical directions on the touch pad contrary in mode where the touch pad is opened more than approximately 180° as in mode where the touch pad is opened 180° or less.

In addition the mobile terminal or touch pad UI according to the invention is arranged to observe movements or the position of the user fingertip on the touch pad by a touch sensitive means of the touch pad UI input device and determine and also display the position of the cursor in the display by the position of the fingertip on the touch pad. Further according to an embodiment of the invention the touch pad UI input device may be pressure sensitive, whereupon the mobile terminal or touch pad UI may be arranged to observe presses of the user fingertip on the touch pad by a pressure sensitive means of the pressure sensitive touch pad UI input device and determine a click-operation by pressing the touch pad with the finger.

Alternatively the touch pad UI input device or a sensitive area may be arranged fixedly into the back side of the mobile terminal in a monoblock-type terminal construction whereupon the monoblock-type mobile terminal is arranged to operate as a flip-type terminal construction which touch pad UI is completely opened.

It should also be noted that the touch pad UI input device according to any embodiment of the invention may comprise a pressure sensitive means under the touch pad UI surface for example so that a user can do point and click -operations as normally done with a mouse and the position of the cursor on the display is determined by the position of the fingertip on the touch pad and clicking is achieved by pressing the touch pad with the same finger in the most advantageous embodiment of the invention. Clicking may be achieved also by pressing a certain button locating, for example, in the front side of a mobile terminal. The button may be pressed for example by a thumb. In addition it should be noted that the pressure sensitive means may be implemented by a dynamic or clickable (which may have only binary state) means. Clickable means may be constructed by dome structure in order to achieve physical feedback to the user when use the means. Also the dynamic means may be used in "binary state", whereupon "feedback" to the user when using the means may be achieved by audible click-sound.

Further a mobile terminal, both monoblock-type mobile terminal and also in flip-type terminal construction, may according to an additional embodiment of the present invention be arranged to divide the touch pad UI virtually into the two or more portion, for example one portion for a left hand and one portion for a right hand, whereupon a user can move a cursor with his right hand finger, scroll a content displayed in the display of the mobile terminal in the direction of up/down by moving his left hand finger to the up/down or in the direction of left/right by moving his left hand finger to the left/right on the surface of the touch pad UI input device. Furthermore the mobile terminal according to the invention may be arranged to zoom the content of the display in/out, when the user moves his left hand finger on the left portion of the surface of the touch pad UI, for example, and at the same time pressing the right portion of the touch pad UI input device by a right hand finger, for example. Alternatively the mobile terminal may comprise a certain button, such as a button locating, for example, in the front side of the mobile terminal, whereupon the user can press the button at the same when moving his finger on the surface of the touch pad UI in order to zoom the content of the display.

According to the invention a user can advantageously achieve all the same functionality with the touch pad UI input device than with a pen-input UI, except that the pen is not needed.

The invention relates to a method for providing a touch pad UI function for a mobile terminal, where the mobile terminal comprises a display and wherein the touch pad UI is a touch pad user interface input device, comprising the steps of:
- arranging the touch pad UI into the back side of the mobile terminal,
- operating the touch pad UI by touching the touch pad UI at least by one finger, and
- observing the position of at least one finger on the UI, and determining the corresponding position of at least one cursor on the display in order to displaying said cursor according to the position of at least one finger on the UI.

The invention further relates to a mobile terminal comprising a touch pad UI and a display, wherein the touch pad UI is a touch pad user interface input device, and
- wherein the touch pad UI is arranged into the back side of the mobile terminal,
- wherein the touch pad UI is arranged to be operated by a touch of at least one finger, and
- the mobile terminal is further arranged to observe the position of at least one finger on the UI, and determine the corresponding position of at least one cursor on the display in order to display said cursor according to the position of at least one finger on the UI.

The invention further relates to a touch pad UI for a mobile terminal, where the mobile terminal comprises a display, wherein the touch pad UI is a touch pad user interface input device, and
- wherein the touch pad UI is arrangeable into the back side of the mobile terminal,
- wherein the touch pad UI is arranged to be operated by a touch of at least one finger, and
- the UI is further arranged to observe the position of at least one finger on the UI, and determine the corresponding position of at least one cursor on the display in order to display said cursor according to the position of at least one finger on the UI.

Furthermore the invention relates to a touch pad UI, where the touch pad UI is a touch pad user interface input device comprising a touch sensitive surface to detect touch and movement of a finger on the surface of the touch pad UI and further comprising a pressure sensitive layer under the touch sensitive surface to detect press of a finger on the touch pad UI simulating a click-operation.

The best mode of the invention is considered to be an implementation of a touch pad UI input device in a mobile terminal, where the touch pad is at least in one mode arranged into the back side of the mobile terminal in use so that a user can see the display side (front side) of the mobile terminal in the field of vision, support the mobile terminal by his fingers at the back side and at the same time input data through the touch pad locating in the back side of the mobile terminal by using the same fingers by which he supports the mobile terminal and further seeing a cursor moving on the display of the mobile terminal and following the movements of his finger on the touch pad UI at the same time when moving his finger on the touch pad UI.

### BRIEF DESCRIPTION OF THE DRAWINGS

Next the invention will be described in greater detail with reference to exemplary embodiments in accordance with the accompanying drawings, in which
- Figure 1: illustrates a flow diagram of an exemplary method for providing a mobile terminal according to an advantageous embodiment of the present invention,
- Figure 2: illustrates a flow diagram of an exemplary method for providing a mobile terminal according to an additional advantageous embodiment of the present invention,
- Figure 3a: illustrates a front part of an exemplary mobile terminal embodying the first advantageous embodiment of the present invention,
- Figure 3b: illustrates a back side part of an exemplary mobile terminal embodying the first advantageous embodiment of the present invention,
- Figure 4a: illustrates an exemplary mobile terminal embodying the first aspect of the second advantageous embodiment of the present invention in a perspective view,
- Figure 4b: illustrates an exemplary mobile terminal embodying the first aspect of the second advantageous embodiment of the present invention in a side view,
- Figure 5a: illustrates an exemplary mobile terminal embodying the second aspect of the second advantageous embodiment of the present invention in a perspective view,
- Figure 5b: illustrates an exemplary mobile terminal embodying the second aspect of the second advantageous embodiment of the present invention in a side view,
- Figure 6a: illustrates an exemplary mobile terminal embodying the third aspect of the second advantageous embodiment of the present invention in a perspective view,
- Figure 6b: illustrates an exemplary mobile terminal embodying the third aspect of the second advantageous embodiment of the present invention in a side view,
- Figure 7a: illustrates movements of a finger on the touch pad of an exemplary mobile terminal according to the present invention, and
- Figure 7b: illustrates movements of a cursor on the display of an exemplary mobile terminal according to the present invention.

### DETAILED DESCRIPTION

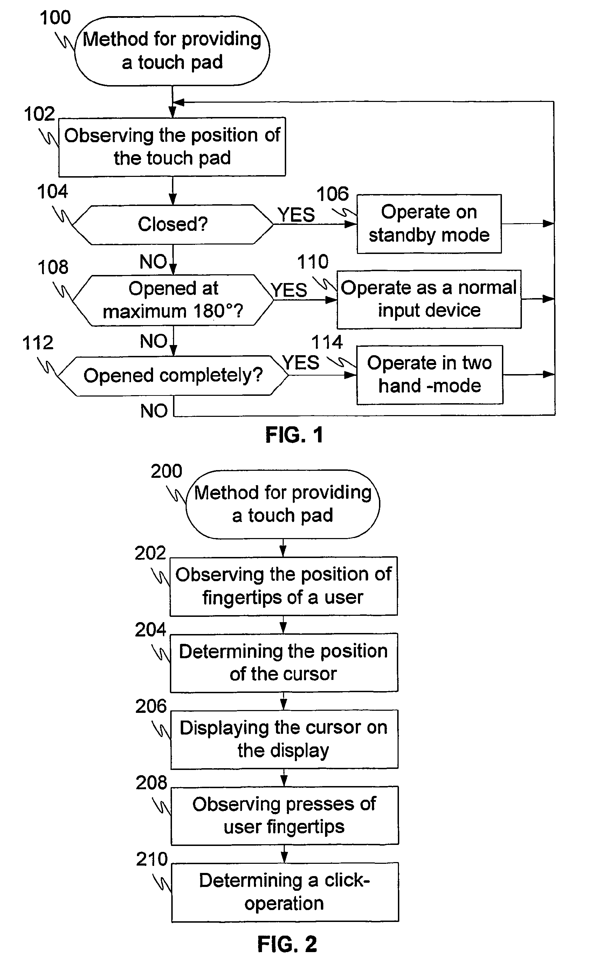

Figure 1 illustrates a flow diagram of an exemplary method 100 for providing a mobile terminal according to an advantageous embodiment of the present invention comprising a touch pad UI input device. Especially the method 100 may be implemented in a flip-type terminal construction. The method may be considered to run as a loop, where in step 102 the position or the angle of the touch pad UI relative to the mobile terminal where the touch pad UI is hinged is observed. In step 104 it is observed whether the touch pad is closed whereupon the mobile terminal is operated for example on standby mode and the touch pad UI acts as a mechanical protector for the display of the mobile terminal and also for the sensitive surface of the touch pad UI in step 106. If the touch pad UI is not closed the opening angle of the touch pad UI is observed in step 108 and if the opening angle is in a certain area, for example between 5° and at maximum approximately 180°, the touch pad UI is operated as a typical touch pad UI input device in laptops, where the mobile terminal may read the output of the touch pad UI for example in similar way as a laptop in step 110.

If the touch pad UI is, however, opened completely in step 112 (approximately 360°, whereupon the touch pad UI is flipped to the back side of the mobile terminal) the touch pad UI is operated in so-called two-hand -mode, where the user can hold the mobile terminal with both hands seeing the display and controlling the touch pad UI input device for example with his middle fingers, which fingers among others basically support the mobile terminal in the back side and in fact touch at least partly the touch sensitive surface of the touch pad UI in step 114. In this mode the touch pad UI is located advantageously directly behind the display, whereupon an illusion may be achieved where the touch pad UI and display seems to operate "transparently". In addition in the two-hand -mode a conversion for the direction data of the fingers movements on the touch pad UI is typically made, especially in direction perpendicular to the hinge, because the cursor movements on the display depends on the position angle of the touch pad relative to the mobile terminal. Let us consider the flip-type terminal construction, where the touch pad UI is hinged to the mobile terminal at the lowest part, for example. Now, if the touch pad UI is opened approximately 90° and a user moves his finger towards the hinge on the touch pad (farther from him) or alternatively if the touch pad is opened approximately 180° and a user moves his finger towards the hinge (upward) on the touch pad, the cursor advantageously moves up on the display, but if the touch pad is opened much over 180° (for example completely or approximately 360°) and the user moves his finger again towards the hinge (now downward) on the touch pad, the cursor should logically moves, however, downward on the display. Similar-type conversion has to be done also in situations, where the touch pad UI is hinged to the mobile terminal at somewhere else, such as at the right or left part.

Otherwise, if the method does not observe the position angle of the touch pad UI relative to the mobile terminal, the method may go back to step 102.

Figure 2 illustrates a flow diagram of an exemplary method 200 for providing a mobile terminal according to an additional advantageous embodiment of the present invention comprising a touch pad UI input device. The method 200 may be implemented both in a flip-type and monoblock-type terminal constructions.

The method may be considered to run as a loop, where in step 202 the position of at least one fingertip of a user on the touch pad of the mobile terminal may be observed. The position data of the fingertip on the surface of the touch pad UI may be converted into the corresponding position data of the cursor on the display in step 204, when the cursor may be displayed in step 206 in a meaningful position on the display relative to the position of the fingertip on the touch pad so that if the user moves his finger on the surface of the touch pad the cursor will move on the display of the mobile terminal logically to the same direction as the finger on the touch pad.

In step 208 presses of the user fingertip on the touch pad UI may be observed, especially if the touch pad UI is pressure sensitive touch pad UI input device. The presses of the fingertip on the touch pad UI may be determined as a click-operation in step 210, where the position of the fingertip at the moment when the touch pad is pressed is also registered because the appropriate input command depends on the position of the fingertip on the touch sensitive surface of the touch pad UI or the cursor on the display. Alternatively the user may press a certain button locating, for example, in the front side of a mobile terminal in step 208. The button may be pressed for example by a thumb. In step 210 the presses may be associated also to other functions, such as zoom-function, instead of simple click-operation.

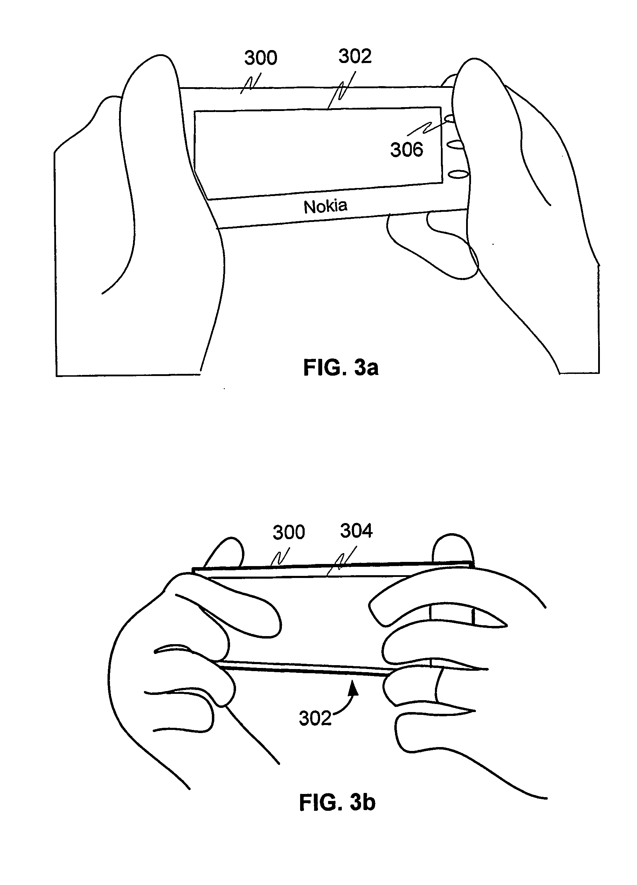

Figure 3a illustrates a front part and Figure 3b a back side part of an exemplary mobile terminal 300 embodying the first advantageous embodiment of the present invention. The mobile terminal 300 is a monoblock-type mobile terminal, where the touch pad UI input device 304 is advantageously arranged fixedly into the back side of the mobile terminal 300 (opposite side of the display 302 in the mobile ter minal 300). The touch pad 304 is advantageously arranged so, that in use the fingers of the user will support the mobile terminal 300 in the back side of the mobile terminal and the thumbs may be used for pressing control buttons 306 located in the front side of the mobile terminal, for example, and especially the middle fingers, for instance, may be used for operating the touch pad UI input device 304.

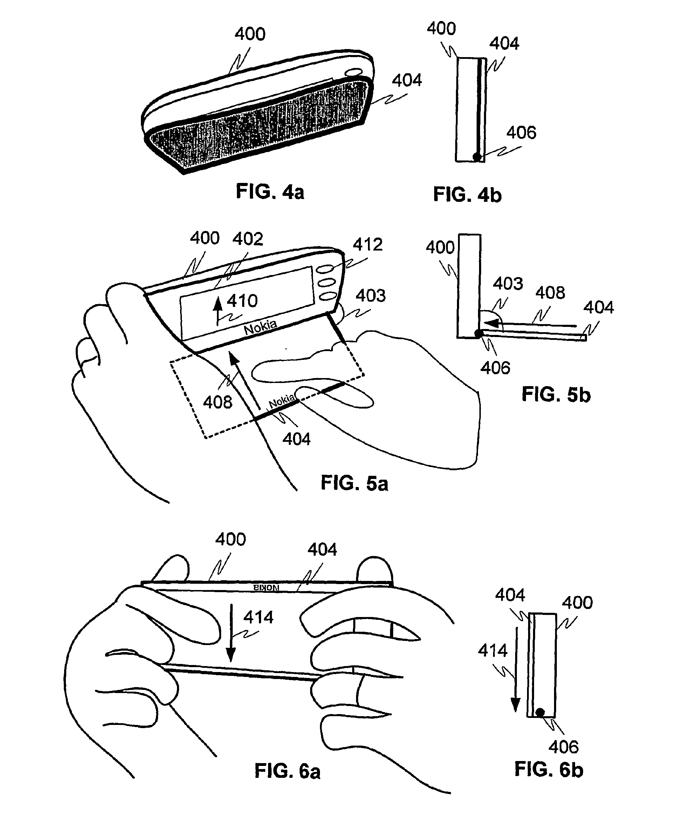

Figure 4a illustrates an exemplary mobile terminal 400 embodying the first aspect of the second advantageous embodiment of the present invention in a perspective view, and Figure 4b the same embodiment in a side view. The mobile terminal 400 is a flip-type mobile terminal construction comprising a touch pad UI input device 404 hinged to the mobile terminal 400 by a hinge 406 in a way that in a closed position as in Figure 4b the touch pad UI input device 404 act as a mechanical protector for the sensitive area of the touch pad 404 and the display unit of the mobile terminal 400.

Figure 5a illustrates an exemplary mobile terminal 400 embodying the second aspect of the second advantageous embodiment of the present invention in a perspective view, and Figure 5b the same embodiment in a side view, where the touch pad UI input device 404 is opened approximately to the horizontal position (position angle 403 is about 90°) relative to the mobile terminal 400. Now the touch pad UI input device 404 may operate as an input device in laptops, whereupon when the user moves his finger towards the hinge 406 in the direction of an arrow 408 the cursor on the display 402 will advantageously move in the direction of an arrow 410.

Figure 6a illustrates an exemplary mobile terminal 400 embodying the third aspect of the second advantageous embodiment of the present invention in a perspective view, and Figure 6b the same embodiment in a side view, where the touch pad UI input device 404 is completely opened (approximately 360°) relative to the mobile terminal 400, and when the touch pad 404 locates in the back side of the mobile terminal 400. Now the touch pad UI input device 404 may operate as a "transparent" pointing and input device, where the user may support the mobile terminal 400 with his fingers in the back side of the mobile terminal 400 and at the same time use his thumbs for pressing control buttons 412 (Figure 5a); for example, and especially use his middle fingers, for instance, for operating the sensitive area of the touch pad UI input device 404 so that the user may "see" the movements of his finger on the touch pad 404 as movements of the cursor ("transparently") on the display of the mobile terminal 400.

Especially in this embodiment (Figure 6a and 6b) the conversion for the direction data of the fingers movements on the touch pad UI may be made particularly in vertical direction, because if the user now moves his finger towards the hinge 406 in the direction of an arrow 414 (vertical direction), in fact he moves his finger downward (whereas in Figure 5a and 5b he moves his finger in horizontal direction) and thereby the cursor displayed on the display would logically move also downward (whereas in Figure 5a and 5b it moves upward). Advantageously this function may be achieved programmatically.

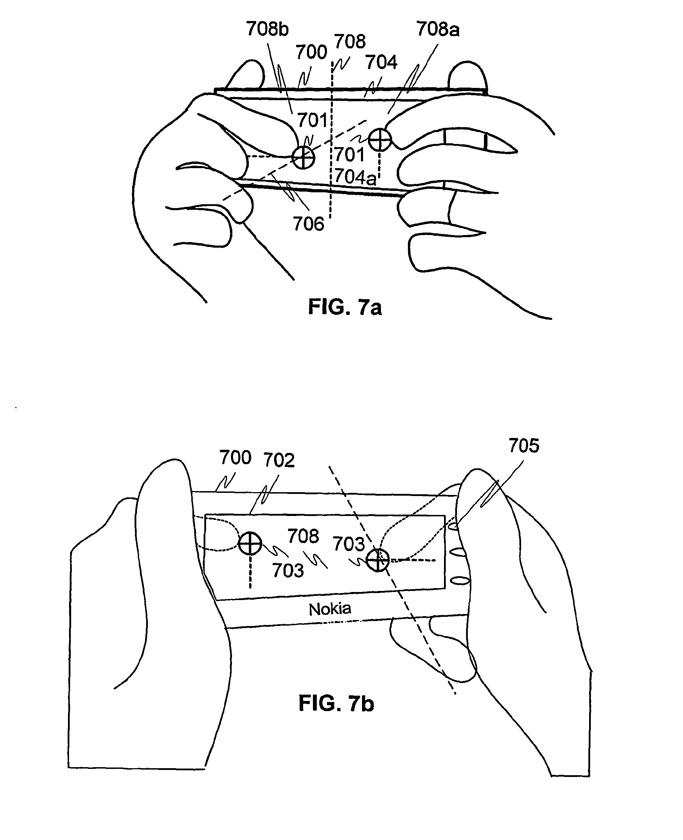

Figure 7a illustrates movements 701 of fingers on the touch pad UI input device 704 and figure 7b the corresponding movements of the cursor or cursors 703 on the display 702 of an exemplary mobile terminal 700 according to the present invention. In the embodiment illustrated in figures 7a and 7b the touch pad UI input device 704 advantageously operates as a "transparent" pointing and input device, where the user may support the mobile terminal 700 with his fingers in the back side of the mobile terminal 700 and use his thumbs for pressing control buttons 705, for example, and especially use his middle fingers, for instance, for operating the sensitive area 704a of the touch pad UI input device 704 so that the user may "see" the movements 701 of his finger/fingers ("transparently") on the touch pad 704 as movements of the cursor/cursors 703 on the display 702 of the mobile terminal 700. The cursor 703 is typically displayed on the display 702 essentially on the imaged line 706 extending from the finger on the touch pad perpendicularly through the touch pad UI 704 and display 702.

Different kinds of menus, icons, buttons and virtual keyboard, such as qwerty-type keyboard, may be activated and displayed on the display 702 of the mobile terminal 700, and especially when having the touch pad UI in the back side of the mobile terminal the user may make easily various choices by moving 701 his finger/fingers on the touch pad 704 so, that the cursor/cursors 703 will move onto the displayed and desired menu or button on the display 702 of the mobile terminal 700, and then pressing the touch pad 704 by the same finger simulating a click-operation.

Further the display 702 may be divided virtually into the two or more portion, for example one portion 708a for left hand and one portion 708b for right hand, whereupon a user can move a cursor with his right hand finger, scroll a content displayed on the display of the mobile terminal in the direction of up/down by moving his left hand finger to the up/down or in the direction of left/right by moving his left hand finger to the left/right on the surface of the touch pad UI input device, for example. The division may be done advantageously in vertical direction (in direction of line 708). The invention is however not restricted to this embodiment, but the division may also be done in horizontal direction, or both in horizontal and vertical direction if divided into the more than two portions, for example.

Furthermore it may be possible for the user to zoom the content of the display 702 in/out by moving his left finger on the left portion (708a) of the surface of the touch pad UI input device 704, for example, and at the same time pressing the right portion (708b) of the touch pad UI input device 704 by a right hand finger, for example, especially when the touch pad UI is divided into the two portions (described in Figure 7a). Alternatively, at the same, when the user moves his finger on the surface of the touch pad UI 704, he can press, not the surface of the touch pad UI, but a certain button, such as a button 705 locating, for example, in the front side of a mobile terminal 700 in order to zoom the content of the display 702 in or out. The button 705 may be pressed for example by a thumb. The zoom-effect may be implemented also in embodiments of the invention although the touch pad would not be divided.

According to a further embodiment of the invention more than one cursor may be displayed on the display at the same time, but this may, however, be optional. Further it has to be noted that the embodiment illustrated in figures 7a and 7b may be implemented both in a monoblock-type mobile terminal construction as well in a flip-type mobile terminal construction. Especially when implemented the embodiment illustrated in figures 7a and 7b in the flip-type mobile terminal construction, the touch pad UI hinged to the mobile terminal is completely opened into the back side position. Furthermore it should be noted that functionality, such as virtual keyboard, discussed in connection with figures 7a and 7b, may also be implemented in other embodiment of the invention introduced in this document.

The invention has been explained above with reference to the aforementioned embodiments, and several advantages of the invention have been demonstrated. It is clear that the invention is not only restricted to these embodiments, but comprises all possible embodiments within the spirit and scope of the inventive thought and the following patent claims. For example, different kinds of functionality may be achieved by programmatically, such as the touch pad may be divided virtually in two parts to have separate left and right parts, if desired, in any embodiment described above.

Further it has to be noted that the touch pad UI may be arranged to carry out one part of functionality and the mobile terminal another part of functionality of the whole arrangement comprising the touch pad UI and mobile terminal. The invention does not explicitly define certain tasks for the touch pad UI and certain tasks for the mobile terminal, but the component executing the task may vary between the touch pad UI and mobile terminal.

Furthermore according to additional embodiments of the invention the touch pad UI device may be hinged to the mobile terminal also in somewhere else than at the lowest part, such as at the upper part, whereupon conversion for the direction data of the fingers movements on the touch pad may be made particularly in vertical direction when the touch pad UI is opened more than approximately 180° in vertical direction relative to the mobile terminal.

Similarly, the touch pad UI device may be hinged to the mobile terminal at the right or left part, whereupon conversion for the direction data of the fingers movements on the touch pad may be made particularly in horizontal direction when the touch pad UI is opened more than approximately 180° in horizontal direction relative to the mobile terminal.

In this document the vertical direction is used to be the direction, which is in direction of the arrow 414 illustrated in figure 6a and 6b and the horizontal direction is used to be the direction essentially perpendicular to said vertical direction. The horizontal direction is illustrated in figure 5a and 5b by the arrow 408.

## Claims

1. A mobile terminal (300, 400, 700) comprising a display (302, 402, 702) in the first side of the mobile terminal and a touch pad UI (304, 404, 704), wherein the touch pad UI is a touch pad user interface input device, **characterised in that**
- the touch pad UI (304, 404, 704) is hinged (406) to the mobile terminal so that the touch pad UI is turnable around the hinge from the first side of the mobile terminal to the opposite side of the first side,
- the touch pad UI (304, 404, 704) is arranged to be operated by a touch of at least one finger, and
- the mobile terminal (300, 400, 700) is further arranged to observe the position (701) of at least one finger on the touch pad UI (304, 404, 704), and determine the corresponding position of at least one cursor (703) on the display in order to display said cursor according to the position of at least one finger on the touch pad UI.

2. A mobile terminal according to claim 1, wherein the touch pad UI (304, 404, 704) is a multifunctional pressure sensitive touch pad user interface input device

3. A mobile terminal according to claim 1, wherein the mobile terminal (300, 400, 700) is arranged to display a cursor (703) on the display essentially on the imaged line (706) extending from the finger on the touch pad perpendicularly through the touch pad (304, 404, 704) and display (302, 402, 702), when the touch pad is turned to the opposite side of said first side.

4. A mobile terminal according to claim 1, wherein the touch pad UI is hinged (406) to the mobile terminal at least at one of the following part of mobile terminal: lowest part, upper part, right part and left part.

5. A mobile terminal according to claim 4, wherein the hinged touch pad UI is turnable around said hinge (406) into the position of angle between 0° and 360° relative to the mobile terminal (300, 400, 700) and the mobile terminal is arranged to observe said position angle and if the touch pad UI is closed, when the position angle is essentially 0°, the touch pad UI is arranged to act as a mechanical protector for the display and the touch sensitive surface of the touch pad UI, and if the touch pad UI is opened so that the position angle is more than approximately 0°, the touch pad UI is arranged to act as a data input and pointing device.

6. A mobile terminal according to claim 5, wherein the touch pad UI (304, 404, 704) is turned completely open so that the position angle is essentially 360°, the touch pad UI is arranged to operate in two-hand mode, where data is arranged to be inputted by at least one finger through the touch pad touch pad UI device and where a cursor on the display of the mobile terminal corresponding the moving finger is arranged to move according the movements of the finger on the touch pad.

7. A mobile terminal according to claim 5, wherein the mobile terminal (300, 400, 700) is arranged to observe whether the position angle of the touch pad UI hinged either to bottom or upper part of the mobile terminal, is more than predetermined limit and if, arranged to convert the read direction data of the fingers movements on the touch pad in vertical direction to contrary.

8. A mobile terminal according to claim 5, wherein the mobile terminal (300, 400, 700) is arranged to observe whether the position angle of the touch pad UI hinged either to right or left part of the mobile terminal, is more than predetermined limit and if, arranged to convert the read direction data of the fingers movements on the touch pad in horizontal direction to contrary.

9. A mobile terminal according to claim 7 or 8, wherein the predetermined limit for the position angle is approximately 180°.

10. A mobile terminal according to claim 1, wherein the mobile terminal wherein the mobile terminal (300, 400, 700) is arranged to display at least one object on the display of the mobile terminal, where the object is at least one of the following: menu, icon, number, letter, character, button and at least part of virtual keyboard.

11. A mobile terminal according to claim 1, wherein the mobile terminal wherein the mobile terminal (300, 400, 700) is arranged to observe presses of at least one finger on the touch pad UI (304, 404, 704) and determine the press as a click-operation.

12. A mobile terminal according to claim 1, wherein the mobile terminal (300, 400, 700) is arranged to divide the touch pad UI (304, 404, 704) virtually at least one first portion and at least one second portion.

13. A mobile terminal according to claim 12, wherein the mobile terminal (300, 400, 700) is arranged to move a cursor (703) in the display (302, 402, 702) when moving a first finger on the first portion of the touch pad UI and scrolling a content displayed on the display to the up, down, left and right directions when moving a second finger on the second portion of the touch pad UI in appropriate direction.

14. A mobile terminal according to claim 12, wherein the mobile terminal (300, 400, 700) is arranged to zoom a content displayed on the display (302, 402, 702) in/out when the first portion of the touch pad UI (304, 404, 704) is pressed by a first finger and a second finger is moved on the second portion of the touch pad UI at the same time.

15. A mobile terminal according to claim 1, wherein the mobile terminal (300, 400, 700) is arranged to zoom a content displayed on the display (302, 402, 702) in/out when a button is pressed in the mobile terminal and a finger is moved on the touch pad UI (304, 404, 704) at the same time.

16. A method for providing a mobile terminal (300, 400, 700) comprising a display (302, 402, 702) in the first side of the mobile terminal and a touch pad UI (304, 404, 704), wherein the touch pad UI is a touch pad user interface input device, **characterised in that** in the method
- the touch pad UI (304, 404, 704) is hinged (406) to the mobile terminal so that the touch pad UI is turnable around the hinge from the first side of the mobile terminal to the opposite side of the first side,
- the touch pad UI (304, 404, 704) is arranged to be operated by a touch of at least one finger, and
- the mobile terminal (300, 400, 700) is further arranged to observe the position of at least one finger on the touch pad UI (304, 404, 704), and determine the corresponding position of at least one cursor (703) on the display (302, 402, 702) in order to display said cursor according to the position of at least one finger on the touch pad UI.

17. A method according to claim 16, wherein the touch pad UI (304, 404, 704) is a multifunctional pressure sensitive touch pad user interface input device.

18. A method according to claim 16, further arranging the mobile terminal (300, 400, 700) to display a cursor (703) on the display essentially on the imaged line (706) extending from the finger on the touch pad perpendicularly through the touch pad UI (304, 404, 704) and display (302, 402, 702), when the touch pad is turned to the opposite side of said first side..

19. A method according to claim 16, wherein the touch pad UI (304, 404, 704) is hinged (406) to the mobile terminal at least at one of the following part of the mobile terminal: lowest part, upper part, right part and left part.

20. A method according to claim 19, wherein the touch pad UI (304, 404, 704) is hinged (406) to the mobile terminal so that the hinged touch pad UI is turnable in the position of angle between 0° and 360° relative to the mobile terminal around the hinge so that if the touch pad UI is closed, when the position angle is essentially 0°, the touch pad UI acts as a mechanical protector for the display and the touch sensitive surface of the touch pad UI, and if the touch pad UI is opened so that the position angle is more than approximately 0°, the touch pad UI acts as a data input and pointing device.

21. A method according to claim 20, wherein the mobile terminal (300, 400, 700) with the touch pad UI (304, 404, 704) is arranged to be operated in two-hand mode when the touch pad UI is completely opened so that the position angle is essentially 360° so that when moving the finger on the touch pad a cursor (703) corresponding the moving finger will move on the display (302, 402, 702) of the mobile terminal according to the movements of the finger.

22. A method according to claim 20, wherein the mobile terminal (300, 400, 700) is arranged to observe whether the position angle of the touch pad UI (304, 404, 704), which is hinged either to bottom or upper part of the mobile terminal, is more than predetermined limit and if, converting the read direction data of the fingers movements on the touch pad in vertical direction to contrary.

23. A method according to claim 20, wherein the mobile terminal (300, 400, 700) is arranged to observe whether the position angle of the touch pad UI (304, 404, 704), which is hinged either to right or left part of the mobile terminal, is more than predetermined limit and if, converting the read direction data of the fingers movements on the touch pad in horizontal direction to contrary.

24. A method according to claim 22 or 23, wherein the predetermined limit for the position angle is approximately 180°.

25. A method according to claim 16, wherein the mobile terminal (300, 400, 700) is arranged to display at least one object on the display (302, 402, 702) of the mobile terminal, where the object is at least one of the following: menu, icon, number, letter, character, button and at least part of virtual keyboard.

26. A method according to claim 16, wherein the mobile terminal (300, 400, 700) is arranged to observe press of at least one finger on the touch pad UI (304, 404, 704) and determine the press as a click-operation.

27. A method according to claim 16, wherein the mobile terminal (300, 400, 700) is arranged to divide the touch pad UI (304, 404, 704) virtually at least one first portion and at least one second portion.

28. A method according to claim 27, wherein the mobile terminal (300, 400, 700) is arranged to move a cursor (703) in the display when the first finger is moved on the first portion of the touch pad UI (304, 404, 704) and to scrolls a content displayed on the display (302, 402, 702) when a second finger is moved on the second portion of the touch pad UI to up, down, left and right directions.

29. A method according to claim 27, wherein the display (302, 402, 702) is arranged to zoom a content displayed on the display (302, 402, 702) in/out when the first portion of the touch pad UI (304, 404, 704) is pressed by a first finger and a second finger is moved on the second portion of the touch pad UI at the same time.

30. A method according to claim 16, wherein the mobile terminal (300, 400, 700) is arranged to zoom the content displayed on the display (302, 402, 702) in/out when a button is pressed in the mobile terminal and a finger is moved on the touch pad UI (304, 404, 704) at the same time.

## Patentansprüche

1. Mobiles Endgerät (300, 400, 700), umfassend eine Anzeige (302, 402, 702) in der ersten Seite des mobilen Endgeräts und eine Touchpad UI (304, 404, 704), wobei die Touchpad UI eine Touchpad-Benutzerschnittstellen-Eingabevorrichtung ist,
**dadurch gekennzeichnet, dass**
- die Touchpad UI (304, 404, 704) an dem mobilen Endgerät so angelenkt (406) ist, dass die Touchpad UI um das Gelenk von der ersten Seite des mobilen Endgeräts zu der, der ersten Seite gegenüberliegenden Seite gedreht werden kann,
- die Touchpad UI (304, 404, 704) eingerichtet ist, durch die Berührung mindestens eines Fingers bedient zu werden, und
- das mobile Endgerät (300, 400, 700) weiter eingerichtet ist, die Position (701) mindestens eines Fingers auf der Touchpad UI (304, 404, 704) wahrzunehmen und die entsprechende Position mindestens eines Eingabezeigers (703) auf der Anzeige zu bestimmen, um den Eingabezeiger gemäß der Position des mindestens einen Fingers auf der Touchpad UI anzuzeigen.

2. Mobiles Endgerät gemäß Anspruch 1, wobei die Touchpad UI (304, 404, 704) eine multifunktionale, druckempfindliche Touchpad-Benutzerschnittstellen-Eingabevorrichtung ist.

3. Mobiles Endgerät gemäß Anspruch 1, wobei das mobile Endgerät (300, 400, 700) eingereichtet ist, einen Eingabezeiger (703) auf der Anzeige im Wesentlichen auf der gedachten Linie (706) anzuzeigen, die sich von dem Finger auf dem Touchpad senkrecht durch das Touchpad (304, 404, 704), und die Anzeige (302, 402, 702) erstreckt, wenn das Touchpad auf die der ersten Seite gegenüberliegende Seite gedreht ist.

4. Mobiles Endgerät gemäß Anspruch 1, wobei die Touchpad UI an dem mobilen Endgerät, an mindestens einem der folgenden Teile des Endgeräts angelenkt (406) ist: einem untersten Teil, einem oberen Teil, einem rechten Teil und einem linken Teil.

5. Mobiles Endgerät gemäß Anspruch 4, wobei die angelenkte Touchpad UI, um das Gelenk (406) in die Winkelstellung zwischen 0° und 360° relativ zu dem mobilen Endgerät (300, 400, 700) drehbar ist, und wobei das mobile Endgerät eingerichtet ist, die Winkelstellung wahrzunehmen, und wenn die Touchpad UI geschlossen ist, wenn die Winkelstellung im Wesentlichen 0° beträgt, die Touchpad UI eingerichtet ist, um als ein mechanischer Schutz für die Anzeige und die berührungsempfindliche Oberfläche der Touchpad UI zu wirken, und wobei, wenn die Touchpad UI geöffnet ist, so dass die Winkelstellung mehr als etwa 0° beträgt, die Touchpad UI eingerichtet ist, als eine Dateneingabe- und Zeigevorrichtung zu wirken.

6. Mobiles Endgerät gemäß Anspruch 5, wobei die Touchpad UI (304, 404, 704) komplett aufgedreht ist, so dass die Winkelstellung im Wesentlichen 360° beträgt, die Touchpad EI eingerichtet ist, in einem Zweihandmodus zu arbeiten, wobei Daten eingerichtet sind, um durch mindestens einen Finger durch die Touclipad-UI-Vorrichtung des Touchpads eingegeben zu werden und wobei ein Eingabezeiger auf der Anzeige des mobilen Endgeräts, der dem sich bewegenden Finger entspricht, eingerichtet ist, sich gemäß den Bewegungen des Fingers auf dem Touchpad zu bewegen.

7. Mobiles Endgerät gemäß Anspruch 5, wobei das mobile Endgerät (300, 400, 700) eingerichtet ist, wahrzunehmen, ob die Winkelstellung der Touchpad UI, die an dem unteren oder dem oberen Teil des mobilen Endgeräts angelenkt ist, größer als ein vorbestimmter Grenzwert ist, und falls ja, eingerichtet ist, die Leserichtungsdaten der Fingerbewegungen auf dem Touchpad in vertikaler Richtung in das Gegenteil umzuwandeln.

8. Mobiles Endgerät gemäß Anspruch 5, wobei das mobile Endgerät (300, 400, 700) eingerichtet ist, wahrzunehmen, ob die Winkelstellung der Touchpad UI, die an dem rechten oder dem linken Teil des mobilen Endgeräts angelenkt ist, größer als ein vorbestimmter Grenzwert ist, und falls ja, eingerichtet ist, die Leserichtungsdaten der Fingerbewegungen auf dem Touchpad in horizontaler Richtung in das Gegenteil umzuwandeln.

9. Mobiles Endgerät gemäß Anspruch 7 oder 8, wobei der vorbestimmte Grenzwert für die Winkelstellung ungefähr 180° beträgt.

10. Mobiles Endgerät gemäß Anspruch 1, wobei das mobile Endgerät (300, 400, 700) eingerichtet ist, mindestens ein Objekt auf der Anzeige des mobilen Endgeräts anzuzeigen, wobei das Objekt mindestens eines der folgenden ist: ein Menu, ein Icon, eine Nummer, ein Buchstabe, ein Zeichen, eine Taste und mindestens ein Teil einer virtuellen Tastatur.

11. Mobiles Endgerät gemäß Anspruch 1, wobei das mobile Endgerät (300, 400, 700) eingerichtet ist, das Drücken mindestens eines Fingers auf der Touchpad UI (304, 404, 704) wahrzunehmen, und das Drücken als eine Klick-Bedienung zu bestimmen.

12. Mobiles Endgerät gemäß Anspruch 1, wobei das mobile Endgerät (300, 400, 700) eingerichtet ist, die Touchpad UI (304, 404, 704) virtuell in mindestens einen ersten Abschnitt und mindestens in einen zweiten Abschnitt zu teilen.

13. Mobiles Endgerät gemäß Anspruch 12, wobei das mobile Endgerät (300, 400, 700) eingerichtet ist, einen Eingabezeiger (703) auf der Anzeige (302, 402, 702) zu bewegen, wenn sich ein erster Finger auf dem ersten Abschnitt der Touchpad UI bewegt und einen auf der Anzeige angezeigten Inhalt in Aufwärtsrichtung, in Abwärtsrichtung, nach Links und nach Rechts zu scrollen, wenn sich ein zweiter Finger auf dem zweiten Abschnitt der Touchpad UI in geeigneter Richtung bewegt.

14. Mobiles Endgerät gemäß Anspruch 12, wobei das mobile Endgerät (300, 400, 700) eingerichtet ist, einen auf der Anzeige (302, 402, 702) angezeigten Inhalt herein/herauszuzoomen, wenn der erste Abschnitt der Touchpad UI (304, 404, 704) durch einen ersten Finger gedrückt wird und gleichzeitig ein zweiter Finger auf dem zweiten Abschnitt der Touchpad UI bewegt wird.

15. Mobiles Endgerät gemäß Anspruch 1, wobei das mobile Endgerät (300, 400, 700) eingerichtet ist, einen auf der Anzeige (302, 402, 702) angezeigten Inhalt herein/herauszuzoomen, wenn eine Taste des mobilen Endgeräts gedrückt wird und gleichzeitig ein Finger auf der Touchpad UI (304, 404, 704) bewegt wird.

16. Verfahren zum Bereitstellen eines mobilen Endgeräts (300, 400, 700), umfassend eine Anzeige (302, 402, 702) in der ersten Seite des mobilen Endgeräts und eine Touchpad UI (304, 404, 704), wobei die Touchpad UI eine Touchpad-Benutzerschnittstellen-Eingabevorrichtung ist,
**dadurch gekennzeichnet, dass** in dem Verfahren:
- die Touchpad UI (304, 404, 704) so an das mobile Endgerät angelenkt (406) ist, dass die Touchpad UI um das Gelenk von der ersten Seite des mobilen Endgeräts auf die der ersten Seite gegenüberliegende Seite gedreht werden kann, und
- die Touchpad UI (304, 404, 704), eingerichtet ist, durch eine Berührung mindestens eines Fingers bedient zu werden, und
- das mobile Endgerät (300, 400, 700) weiter eingerichtet ist, die Position mindestens eines Fingers auf der Touchpad UI (304, 404, 704) wahrzunehmen, und die entsprechende Position mindestens eines Eingabezeigers (703) auf der Anzeige (302, 402, 702) zu bestimmen, um den Eingabezeiger gemäß der Position des mindestens einen Fingers auf der Touchpad UI anzuzeigen.

17. Verfahren gemäß Anspruch 16, wobei die Touchpad UI (304, 404, 704) eine multifunktionale, druckempfindliche Touchpad-Benutzerschnittstellen-Eingabevorrichtung ist.

18. Verfahren gemäß Anspruch 16, weiter aufweisend das Einrichten des mobilen Endgeräts (300, 400, 700), einen Eingabezeiger (703) auf der Anzeige im Wesentlichen auf der gedachten Linie (706) anzuzeigen, die sich von dem Finger auf dem Touchpad senkrecht durch die Touchpad UI (304, 404, 704) und die Anzeige (302, 402, 702) erstreckt, wenn das Touchpad auf die, der ersten Seite gegenüberliegende Seite gedreht ist.

19. Verfahren gemäß Anspruch 16, wobei die Touchpad UI (304, 404, 704) an dem mobilen Endgerät an mindestens einem der folgenden Teile des mobilen Endgeräts angelenkt (406) ist: einem untersten Teil, einem oberen Teil, einem rechten Teil und einem linken Teil.

20. Verfahren gemäß Anspruch 19, wobei die Touchpad UI (304, 404, 704) so an dem mobilen Endgerät angelenkt (406) ist, dass die angelenkte Touchpad UI um das Gelenk in eine Winkelstellung zwischen 0° und 360° relativ zu dem mobilen Endgerät drehbar ist, so dass, wenn die Touchpad UI geschlossen ist, wenn die Winkelstellung im Wesentlichen 0° beträgt, die Touchpad UI als ein mechanischer Schutz für die Anzeige und die berührungsempfindliche Oberfläche der Touchpad UI wirkt, und wenn die Touchpad UI geöffnet ist, so dass die Wickelstellung mehr als etwa 0° beträgt, die Touchpad UI als eine Dateneingabe- und Zeigevorrichtung wirkt.

21. Verfahren gemäß Anspruch 20, wobei das mobile Endgerät (300, 400, 700), mit der Touchpad UI (304, 404, 704) eingerichtet ist, in einem Zweihandmodus betrieben zu werden, wenn die Touchpad UI vollständig geöffnet ist, so dass die Winkelstellung im Wesentlichen 360° beträgt, sodass wenn der Finger auf dem Touchpad bewegt wird, ein Eingabezeiger (703) sich entsprechend dem sich bewegenden Finger auf der Anzeige (302, 402, 702) des mobilen Endgeräts gemäß den Bewegungen des Fingers bewegen wird.

22. Verfahren gemäß Anspruch 20, wobei das mobile Endgerät (300, 400, 700) eingerichtet ist, wahrzunehmen, ob die Winkelstellung der Touchpad UI (304, 404, 704), die an dem unteren oder dem oberen Teil des mobilen Endgeräts angelenkt ist, größer als ein vorbestimmter Grenzwert ist, und wenn ja, die Leserichtungsdaten der Fingerbewegungen auf dem Touchpad in vertikaler Richtung ins Gegenteil umzuwandeln.

23. Verfahren gemäß Anspruch 20, wobei das mobile Endgerät (300, 400, 700) eingerichtet ist, wahrzunehmen, ob die Winkelstellung der Touchpad UI (304, 404, 704), die an dem rechten oder dem linken Teil des mobilen Endgeräts angelenkt ist, größer als ein vorbestimmter Grenzwert ist, und wenn ja, die Leserichtungsdaten der Fingerbewegungen auf dem Touchpad in horizontaler Richtung ins Gegenteil umzuwandeln.

24. Verfahren gemäß Anspruch 22 oder 23, wobei der vorbestimmte Grenzwert für die Winkelstellung ungefähr 180° beträgt.

25. Verfahren gemäß Anspruch 16, wobei das mobile Endgerät (300, 400, 700) eingerichtet ist, mindestens ein Objekt auf der Anzeige (302, 402, 702) des mobilen Endgeräts anzuzeigen, wobei das Objekt mindestens eines der Folgenden ist: ein Menu, ein Icon, eine Nummer, ein Buchstabe, ein Zeichen, eine Taste und mindestens ein Teil einer virtuellen Tastatur.

26. Verfahren gemäß Anspruch 16, wobei das mobile Endgerät (300, 400, 700) eingerichtet ist, das Drücken mindestens eines Fingers auf die Touchpad UI (304, 404, 704) wahrzunehmen, und das Drücken als eine Klick-Bedienung zu bestimmen.

27. Verfahren gemäß Anspruch 16, wobei das mobile Endgerät (300, 400, 700) eingerichtet ist, die Touchpad UI (304, 404, 704) virtuell in mindestens einen ersten Abschnitt und mindestens in einen zweiten Abschnitt zu teilen.

28. Verfahren gemäß Anspruch 27, wobei das mobile Endgerät (300, 400, 700) eingerichtet ist, einen Eingabezeiger (703) auf der Anzeige zu bewegen, wenn der erste Finger auf dem ersten Abschnitt der Touchpad UI (304, 404, 704) bewegt wird und einen auf der Anzeige (302, 402, 702) angezeigten Inhalt zu scrollen, wenn ein zweiter Finger auf dem zweiten Abschnitt der Touchpad UI in Aufwärtsrichtung, in Abwärtsrichtung, nach Links und nach Rechts bewegt wird.

29. Verfahren gemäß Anspruch 27, wobei das mobile Endgerät (300, 400, 700) eingerichtet ist, einen auf der Anzeige (302, 402, 702) angezeigten Inhalt herein/herauszuzoomen, wenn der erste Abschnitt der Touchpad UI (304, 404, 704) von einem ersten Finger gedrückt wird und gleichzeitig ein zweiter Finger auf dem zweiten Abschnitt der Touchpad UI bewegt wird.

30. Verfahren gemäß Anspruch 16, wobei das mobile Endgerät (300, 400, 700) eingerichtet ist, den auf der Anzeige (302, 402, 702) angezeigten Inhalt herein/herauszuzoomen, wenn eine Taste des mobilen Endgeräts gedrückt wird und gleichzeitig ein Finger auf der Touchpad UI (304, 404, 704) bewegt wird.

## Revendications

1. Terminal mobile (300, 400, 700) comprenant un écran d'affichage (302, 402, 702) dans le premier côté du terminal mobile et une interface utilisateur à pavé tactile (304, 404, 704), dans lequel l'interface utilisateur à pavé tactile est un dispositif d'entrée d'interface utilisateur à pavé tactile,
**caractérisé en ce que :**
- l'interface utilisateur à pavé tactile (304, 404, 704) est articulée (406) sur le terminal mobile de sorte que l'interface utilisateur à pavé tactile puisse tourner autour de l'articulation depuis le premier côté du terminal mobile jusqu'au côté opposé au premier côté,
- l'interface utilisateur à pavé tactile (304, 404, 704) est agencée pour être actionnée par un toucher d'au moins un doigt, et
- le terminal mobile (300, 400, 700) est en outre agencé pour observer la position (701) d'au moins un doigt sur l'interface utilisateur à pavé tactile (304, 404, 704), et déterminer la position correspondante d'au moins un curseur (703) sur l'écran d'affichage afin d'afficher ledit curseur selon la position d'au moins un doigt sur l'interface utilisateur à pavé tactile.

2. Terminal mobile selon la revendication 1, dans lequel l'interface utilisateur à pavé tactile (304, 404, 704) est un dispositif multifonctionnel d'entrée d'interface utilisateur à pavé tactile sensible à la pression.

3. Terminal mobile selon la revendication 1, dans lequel le terminal mobile (300, 400, 700) est agencé pour afficher un curseur (703) sur l'écran d'affichage essentiellement sur la ligne imagée (706) s'étendant à partir du doigt sur le pavé tactile perpendiculairement à travers le pavé tactile (304, 404, 704) et l'écran d'affichage (302, 402, 702), lorsque le pavé tactile est tourné jusqu'au côté opposé audit premier côté.

4. Terminal mobile selon la revendication 1, dans lequel l'interface utilisateur à pavé tactile est articulée (406) sur le terminal mobile au moins au niveau d'une des parties suivantes du terminal mobile : la partie inférieure, la partie supérieure, la partie droite et la partie gauche.

5. Terminal mobile selon la revendication 4, dans lequel l'interface utilisateur à pavé tactile articulée peut tourner autour de ladite articulation (406) dans la position d'angle se trouvant entre 0° et 360° par rapport au terminal mobile (300, 400, 700) et le terminal mobile est agencé pour observer ledit angle de position et si l'interface utilisateur à pavé tactile est fermée, lorsque l'angle de position est essentiellement 0°, l'interface utilisateur à pavé tactile est agencée pour servir en tant que protecteur mécanique pour l'écran d'affichage et la surface tactile de l'interface utilisateur à pavé tactile, et si l'interface utilisateur à pavé tactile est ouverte de sorte que l'angle de position soit supérieur à approximativement 0°, l'interface utilisateur à pavé tactile est agencée pour servir en tant que dispositif d'entrée de données et de pointage.

6. Terminal mobile selon la revendication 5, dans lequel l'interface utilisateur à pavé tactile (304, 404, 704) est tournée de façon à être complètement ouverte de sorte que l'angle de position soit essentiellement 360°, l'interface utilisateur à pavé tactile est agencée pour fonctionner dans un mode à deux mains, où des données sont agencées pour être entrées par au moins un doigt par l'intermédiaire du dispositif d'interface utilisateur à pavé tactile et où un curseur sur l'écran d'affichage du terminal mobile correspondant au doigt mobile est agencé pour se déplacer selon les mouvements du doigt sur le pavé tactile.

7. Terminal mobile selon la revendication 5, dans lequel le terminal mobile (300, 400, 700) est agencé pour observer si l'angle de position de l'interface utilisateur à pavé tactile articulée sur la partie inférieure ou sur la partie supérieure du terminal mobile est supérieur à une limite prédéterminée et dans ce cas, agencé pour convertir les données de direction lues des mouvements des doigts sur le pavé tactile dans la direction verticale en leur contraire.

8. Terminal mobile selon la revendication 5, dans lequel le terminal mobile (300, 400, 700) est agencé pour observer si l'angle de position de l'interface utilisateur à pavé tactile articulée sur la partie droite ou sur la partie gauche du terminal mobile est supérieur à limite prédéterminée et dans ce cas, agencé pour convertir les données de direction lues des mouvements des doigts sur le pavé tactile dans la direction horizontale en leur contraire.

9. Terminal mobile selon la revendication 7 ou 8, dans lequel la limite prédéterminée pour l'angle de position est approximativement 180°.

10. Terminal mobile selon la revendication 1, dans lequel le terminal mobile (300, 400, 700) est agencé pour afficher au moins un objet sur l'écran d'affichage du terminal mobile, où l'objet est au moins un des éléments suivants : un menu, une icône, un nombre, une lettre, un caractère, un bouton et au moins une partie d'un clavier virtuel.

11. Terminal mobile selon la revendication 1, dans lequel le terminal mobile (300, 400, 700) est agencé pour observer des pressions d'au moins un doigt sur l'interface utilisateur à pavé tactile (304, 404, 704) et déterminer la pression en tant qu'opération de clic.

12. Terminal mobile selon la revendication 1, dans lequel le terminal mobile (300, 400, 700) est agencé pour diviser l'interface utilisateur à pavé tactile (304, 404, 704) virtuellement en au moins une première partie et au moins une seconde partie.

13. Terminal mobile selon la revendication 12, dans lequel le terminal mobile (300, 400, 700) est agencé pour déplacer un curseur (703) dans l'écran d'affichage (302, 402, 702) lors du déplacement d'un premier doigt sur la première partie de l'interface utilisateur à pavé tactile et pour faire défiler un contenu affiché sur l'écran d'affichage dans les directions vers le haut, vers le bas, vers la gauche et vers la droite lors du déplacement d'un second doigt sur la seconde partie de l'interface utilisateur à pavé tactile dans une direction appropriée.

14. Terminal mobile selon la revendication 12, dans lequel le terminal mobile (300, 400, 700) est agencé pour réaliser un zoom avant/arrière sur un contenu affiché sur l'écran d'affichage (302, 402, 702) lorsque la première partie de l'interface utilisateur à pavé tactile (304, 404, 704) est pressée par un premier doigt et un second doigt est déplacé sur la seconde partie de l'interface utilisateur à pavé tactile en même temps.

15. Terminal mobile selon la revendication 1, dans lequel le terminal mobile (300, 400, 700) est agencé pour réaliser un zoom avant/arrière sur un contenu affiché sur l'écran d'affichage (302, 402, 702) lorsqu'un bouton est pressé dans le terminal mobile et un doigt est déplacé sur l'interface utilisateur à pavé tactile (304, 404, 704) en même temps.

16. Procédé pour fournir un terminal mobile (300, 400, 700) comprenant un écran d'affichage (302, 402, 702) dans le premier côté du terminal mobile et une interface utilisateur à pavé tactile (304, 404, 704), dans lequel l'interface utilisateur à pavé tactile est un dispositif d'entrée d'interface utilisateur à pavé tactile, **caractérisé en ce que**, dans le procédé :
- l'interface utilisateur à pavé tactile (304, 404, 704) est articulée (406) sur le terminal mobile de sorte que l'interface utilisateur à pavé tactile puisse tourner autour de l'articulation depuis le premier côté du terminal mobile jusqu'au côté opposé au premier côté,
- l'interface utilisateur à pavé tactile (304, 404, 704) est agencée pour être actionnée par un toucher d'au moins un doigt, et
- le terminal mobile (300, 400, 700) est en outre agencé pour observer la position d'au moins un doigt sur l'interface utilisateur à pavé tactile (304, 404, 704), et déterminer la position correspondante d'au moins un curseur (703) sur l'écran d'affichage (302, 402, 702) afin d'afficher ledit curseur selon la position d'au moins un doigt sur l'interface utilisateur à pavé tactile.

17. Procédé selon la revendication 16, dans lequel l'interface utilisateur à pavé tactile (304, 404, 704) est un dispositif multifonctionnel d'entrée d'interface utilisateur à pavé tactile sensible à la pression.

18. Procédé selon la revendication 16, agençant en outre le terminal mobile (300, 400, 700) pour afficher un curseur (703) sur l'écran d'affichage essentiellement sur la ligne imagée (706) s'étendant à partir du doigt sur le pavé tactile perpendiculairement à travers l'interface utilisateur à pavé tactile (304, 404, 704) et l'écran d'affichage (302, 402, 702), lorsque le pavé tactile est tourné jusqu'au côté opposé audit premier côté.

19. Procédé selon la revendication 16, dans lequel l'interface utilisateur à pavé tactile (304, 404, 704) est articulée (406) sur le terminal mobile au moins ai niveau d'une des parties suivantes du terminal mobile : la partie inférieure, la partie supérieure, la partie droite et la partie gauche.

20. Procédé selon la revendication 19, dans lequel l'interface utilisateur à pavé tactile (304, 404, 704) est articulée (406) sur le terminal mobile de sorte que l'interface utilisateur à pavé tactile articulée puisse tourner dans la position d'angle entre 0° et 360° par rapport au terminal mobile autour de l'articulation de sorte que si l'interface utilisateur à pavé tactile est fermée, lorsque l'angle de position est essentiellement 0°, l'interface utilisateur à pavé tactile serve en tant que protecteur mécanique pour l'écran d'affichage et la surface tactile de l'interface utilisateur à pavé tactile, et si l'interface utilisateur à pavé tactile est ouverte de sorte que l'angle de position soit supérieur à approximativement 0°, l'interface utilisateur en tant que pavé tactile serve de dispositif d'entrée de données et de pointage.

21. Procédé selon la revendication 20, dans lequel le terminal mobile (300, 400, 700) avec l'interface utilisateur à pavé tactile (304, 404, 704) est agencé pour être actionné dans un mode à deux mains lorsque l'interface utilisateur à pavé tactile est complètement ouverte de sorte que l'angle de position soit essentiellement 360° de sorte que, lors du déplacement du doigt sur le pavé tactile, un curseur (703) correspondant au doigt mobile se déplacera sur l'écran d'affichage (302, 402, 702) du terminal mobile selon les mouvements du doigt.

22. Procédé selon la revendication 20, dans lequel le terminal mobile (300, 400, 700) est agencé pour observer si l'angle de position de l'interface utilisateur à pavé tactile (304, 404, 704), qui est articulé sur la partie inférieure ou sur la partie supérieure du terminal mobile, est supérieur à une limite prédéterminée et dans ce cas convertir les données de direction lues des mouvements des doigts sur le pavé tactile dans la direction verticale en leur contraire.

23. Procédé selon la revendication 20, dans lequel le terminal mobile (300, 400, 700) est agencé pour observer si l'angle de position de l'interface utilisateur à pavé tactile (304, 404, 704), qui est articulée sur la partie droite ou sur la partie gauche du terminal mobile, est supérieur à une limite prédéterminée et dans ce cas convertir les données de direction lues des mouvements des doigts sur le pavé tactile dans la direction horizontale en leur contraire.

24. Procédé selon la revendication 22 ou 23, dans lequel la limite prédéterminée pour l'angle de position est approximativement 180°.

25. Procédé selon la revendication 16, dans lequel le terminal mobile (300, 400, 700) est agencé pour afficher au moins un objet sur l'écran d'affichage (302, 402, 702) du terminal mobile, ou l'objet est au moins un des éléments suivants : une menu, une icône, un nombre, une lettre, un caractère, un bouton et au moins une partie d'un clavier virtuel.

26. Procédé selon la revendication 16, dans lequel le terminal mobile (300, 400, 700) est agencé pour observer une pression d'au moins un doigt sur l'interface utilisateur à pavé tactile (304, 404, 704) et déterminer la pression en tant qu'opération de clic.

27. Procédé selon la revendication 16, dans lequel le terminal mobile (300, 400, 700) est agencé pour diviser l'interface utilisateur à pavé tactile (304, 404, 704) virtuellement en au moins une première partie et au moins une seconde partie.

28. Procédé selon la revendication 27, dans lequel le terminal mobile (300, 400, 700) est agencé pour déplacer un curseur (703) dans l'écran d'affichage lorsque le premier doigt est déplacé sur la première partie de l'interface utilisateur à pavé tactile (304, 404, 704) et pour faire défiler un contenu affiché sur l'écran d'affichage (302, 402, 702) lorsqu'un second doigt est déplacé sur la seconde partie de l'interface utilisateur à pavé tactile dans les directions vers le haut, vers le bas, vers la gauche et vers la droite.

29. Procédé selon la revendication 27, dans lequel l'écran d'affichage (302, 402, 702) est agencé pour réaliser un zoom avant/arrière sur un contenu affiché sur l'écran d'affichage (302, 402, 702) lorsque la première partie de l'interface utilisateur à pavé tactile (304, 404, 704) est pressée par un premier doigt et un second doigt est déplacé sur la seconde partie de l'interface utilisateur à pavé tactile en même temps.

30. Procédé selon la revendication 16, dans lequel le terminal mobile (300, 400, 700) est agencé pour réaliser un zoom avant/arrière sur le contenu affiché sur l'écran d'affichage (302, 402, 702) lorsqu'un bouton est pressé dans le terminal mobile et un doigt est déplacé sur l'interface utilisateur à pavé tactile (304, 404, 704) en même temps.
